# EUROPÄISCHE PATENTSCHRIFT

(11) **EP 1 932 751 B1**
(45) Veröffentlichungstag und Bekanntmachung des Hinweises auf die Patenterteilung: **22.07.2009**
(21) Anmeldenummer: 07021072.9
(22) Anmeldetag: 27.10.2007
(51) Int. Cl.: B62D 35/00, B62D 37/02

(54) **Vorrichtung zur Positionserfassung eines Spoilers an einem Kraftfahrzeug**
Device for detecting the position of a spoiler on a motor vehicle
Dispositif de détection de la position d'un spoiler sur un véhicule automobile

(30) Priorität: 13.12.2006 DE 102006058722
(43) Veröffentlichungstag der Anmeldung: 18.06.2008
(73) Patentinhaber: Dr. Ing. h.c. F. Porsche Aktiengesellschaft, 70435 Stuttgart (DE)
(72) Erfinder: Djordjevic, Dejan, 70435 Stuttgart (DE)

(56) Entgegenhaltungen:
- DE-A1- 3 512 378
- DE-A1- 10 348 285
- JP-A- 8 258 754

## Beschreibung

Die Erfindung betrifft eine Vorrichtung zur Positionserfassung eines Spoilers an einem Kraftfahrzeug, wobei der Spoiler mit einer Antriebseinheit zwischen einer eingefahrenen Sollgrundstellung und mindestens einer ausgefahrenen Sollbetriebsstellung verfahrbar ist, und wobei zumindest ein Sensor vorgesehen ist, mit dem zumindest eine der Sollstellungen des Spoilers erfassbar ist, und der ausgehend von der erfassten Sollposition erste Positionssignale erzeugt. Eine derartige Vorrichtung ist zum Beispiel aus DE 35112378 A1 bekannt.

Kraftfahrzeuge mit verstellbaren Spoilern bzw. Strömungsleitvorrichtungen sind vielfältig aus dem Stand der Technik bekannt. Diese Spoiler, insbesondere Heckspoiler, weisen zumeist ein Luftleitprofil auf, das gegenüber der Fahrzeugkarosserie zwischen einer eingefahrenen Ruheposition und einer ausgefahrenen Wirkposition verstellbar ist, in welcher der Spoiler als Ganzes im Abstand von der Fahrzeugkarosserie steht. Beispielsweise sind Kraftfahrzeuge bekannt, die einen im Fahrzeugaufbau versenkten und in eine außerhalb des Fahrzeugaufbaus liegende Wirkposition verstellbaren Heckspoiler aufweisen. Die Ausnehmung in der Karosserie stimmt hierbei mit der Kontur-des Luftleitprofils überein, so dass sich der Spoiler in der eingefahrenen Ruheposition formschlüssig und passgenau in die Karosseriekontur einfügt. Durch betätigen eines Antriebs wir der Spoiler mit seinem Unterbau beispielsweise entlang einer Schiene verschoben, und bewegt sich aufgrund einer schrägen Anordnung der Schiene aus dem Fahrzeugaufbau in seine Wirkposition. Die gegenüber der Ruheposition leicht geneigte Ausrichtung des Luftleitprofils in der Wirkposition ist vorgegeben und kann im Betrieb nicht mehr verändert werden. Zur Positionsbestimmung der Spoiler werden Sensoren, insbesondere Hallsensoren, eingesetzt, die die Endlage des jeweiligen Betriebszustands festlegen bzw. bestimmen.

Nachteilig an den aus dem Stand der Technik bekannten Spoilerverstelleinrichtungen ist jedoch, dass dem Fahrzeugführer keine Informationen über den aktuellen Betriebszustand des Spoilers bzw. der Funktionstüchtigkeit der Sensoren geliefert werden, so dass für den Fahrzeugführer die Gefahr einer Fehlinterpretation des Betriebszustandes des Spoilers besteht.

Ausgehend von diesem Stand der Technik ist es daher Aufgabe der vorliegenden Erfindung eine Vorrichtung zu schaffen, die dem Fahrzeugführer Informationen über den Betriebszustand bzw. die Funktionstüchtigkeit des Spoilers bzw. eines der Sensoren bereitstellt.

Vorteilhafte Ausführungsformen sind Gegenstand der Unteransprüche.

Die Aufgabe wird erfindungsgemäß dadurch gelöst, dass eine Abgleichs-Positionserfassungseinrichtung vorgesehen ist, mit der die gegenwärtige Position des Spoilers erfassbar ist, und die ausgehend von der erfassten gegenwärtigen Position zweite Positionssignale erzeugt, wobei eine Auswerteeinheit vorgesehen ist, welche die vom Hallsensor gelieferten ersten Positionssignale und die von der Abgleichs-Positionserfassungseinrichtung gelieferten zweiten Positionssignale auswertet und die ausgehend von dem Auswerteergebnis eine Informationsvorrichtung, die dem Fahrer Informationen über den Zustand mindestens eines der Positionserfassungseinrichtungen bereitstellt, und/oder die Antriebseinheit ansteuert. Dies hat den Vorteil, dass dem Fahrzeugführer Informationen bereitgestellt werden können, die auf eine Fehlfunktion des Spoilers bzw. auf eine Fehlfunktion zumindest eines Sensors schließen lassen und dem Fahrzeugführer somit beispielsweise mitgeteilt werden kann, ob der Spoiler wirklich ausgefahren wurde oder die Funktionstauglichkeit des Sensors gewährleistet ist. Des weiteren ist es möglich, den Fahrer durch die Redundanz der Signale erst dann eine Information zur Verfügung zu stellen, wenn der Spoiler die Endlage tatsächlich nicht erreicht hat.

In einem konkreten Beispiel kann die Vorrichtung über drei Sensoren verfügen, wobei die Antriebseinzeit zwei Inkrementalgeber aufweisen kann ein dritter Sensor einem Zwischenbereich zugeordnet sein kann.

Bei den Sensoren kann es sich bevorzugt um Hallsensoren handeln. Soll der Spoiler nun von einer ersten Stellung in eine zweite Stellung befördert werden, so wird die Antriebseinheit des Spoilers in Richtung der gewünschten Stellung angesteuert bis beispielsweise die Signalflanke des dritten im Zwischenbereich angeordneten Hallsensors anschlägt. Der bereits verfahrene Weg kann über interne Impulse, beispielsweise der Antriebseinheit, gezählt werden und nach jedem Stop abgespeichert werden. Die Antriebseinheit befindet sich nach dem Stoppvorgang in einem vorgegebenen Solltoleranzbereich. Zur Kontrolle von möglichen Positionsdifferenzen, wird nun überprüft, ob sich die Abgleichs-Positionserfassungseinrichtung, die bei dem Verstellvorgang redundant mitlief, im vorgegebenen Solltoleranzbereich befindet.

Eine Ausführungsform sieht ferner vor, dass die Auswerteeinrichtung ausgelegt ist, um ein Ausbleiben von Hallsignalen zu erfassen und beim Ausbleiben von Hallsignalen nach einer vorgebbaren Zeit, gemessen vom Beginn des Bewegens des Spoilers auf die zumindest eine Sollposition zu, anhand der zweiten Positionssignalen zu entscheiden, ob sich der Spoiler innerhalb des Solltoleranzbereichs um die zumindest eine Sollstellung befindet und falls a) die Auswerteeinheit entscheidet, dass sich der Spoiler im Solltoleranzbereich befindet oder falls b) die Auswerteeinheit entscheidet, dass sich der Spoiler nicht im Solltoleranzbereich befindet, die Antriebseinheit und/oder die Informationsvorrichtung ansteuert. Mit anderen Worten kann im Fall a.) davon ausgegangen werden das, befindet sich der Spoiler trotz ausbleiben der Hallsignale in seiner angedachten Stellung, ein Defekt des Hallsensors vorliegt oder im Fall b.) davon ausgegangen werden das, befindet sich der Spoiler nicht im Solltoleranzbereich, ein Defekt der Antriebseinheit des Spoiler vorliegen kann. In beiden Fällen wird der Fahrzeugführer über die Informationsvorrichtung unterrichtet und kann sofort oder beim nächsten Starten des Kraftfahrzeugs entsprechende Schritte veranlassen.

Genauer gesagt ist vorgesehen, dass die Informationsvorrichtung im Fall a) ein vom Fahrer visuell und/oder akustisch und/oder taktil wahrnehmbares Signal ausgeben kann, dass dem Fahrer Informationen über einen möglichen Defekt des Hallsensors bereitstellt und dass die Informationsvorrichtung im Fall b) ein vom Fahrer visuell und/oder akustisch und/oder taktil wahrnehmbares Signal ausgeben kann, dass dem Fahrer Informationen über einen möglichen Defekt der Antriebseinheit bereitstellt. So kann beispielsweise eine optische Mitteilung im Kombiinstrument "Werkstatt aufsuchen" an den Fahrer ausgegeben werden.

Eine weitere Ausführungsform sieht vor, dass die Auswerteeinrichtung ausgelegt ist, um beim Anzeigen der Sollbetriebsstellung durch den Hallsensor die von den zweiten Positionssignalen wiedergegebene zweite Position mit der von den ersten Positionssignalen wiedergegebenen ersten Position zu vergleichen und falls die Abweichung zwischen der ersten Position und der zweiten Position außerhalb eines vorgebbaren Positionstoleranzbereiches liegt, die Antriebseinheit und/oder die Informationsvorrichtung ansteuert. Dies kann wiederum bedeuten das ein Defekt an einem der Bauteile vorliegt und der Fahrzeugführer daraufhin eine Information über die Informationsvorrichtung erhält, gleichzeitig jedoch der Spoiler durch das Ansteuern der Antriebseinheit in seine gewünschte Stellung gefahren wird. Ein Vergleich zwischen der ersten und zweiten Position gekoppelt mit einem Abgleich eines vorgegebenen Positionstoleranzbereichs kann also schnell und sicher eine Fehlstellung bzw. eine Fehlfunktion offenbaren.

Wird eine Abweichung zwischen erster und zweiter Position ermittelt, kann die Informationsvorrichtung ein vom Fahrer visuell und/oder akustisch und/oder taktil wahrnehmbares Signal ausgeben, dass dem Fahrer Informationen über einen möglichen Defekt beispielsweise des Hallsensors bereitstellt.

Eine andere Ausführungsform sieht vor, dass die Abgleichs-Positionserfassungseinrichtung als eine an der Antriebseinrichtung, insbesondere als eine einen Inkrementalgeber umfassende, Wegmesseinrichtung ausgebildet sein kann, mit der der von dem Spoiler zurückgelegte Weg erfassbar ist. Dies hat den Vorteil, dass eine genaue Bestimmung der eigentlichen Position des Spoilers und damit indirekt der Antriebseinrichtung ermöglicht wird.

Eine bevorzugte Ausführungsform sieht vor, dass die Abgleichs-Positionserfassungseinrichtung ein Rückstellmittel aufweisen kann mit dem bei Übereinstimmung zwischen erster und zweiter Position an der Abgleichs-Positionserfassungseinrichtung ein vorbestimmter Wert für die Position eingestellt werden kann.

Dies ist insbesondere dann Vorteilhaft, wenn sich der Spoiler durch irgendeinen Grund in einem verstellten Zustand befindet und somit mit Hilfe der Rückstelltaste eine neue Normierung der Endpositionen bzw. Stellungen des Spoilers durchgeführt werden kann.

Nachfolgend wird das Prinzip der Vorrichtung an lediglich einem Beispiel in einer schematisch dargestellten Zeichnung erläutert.

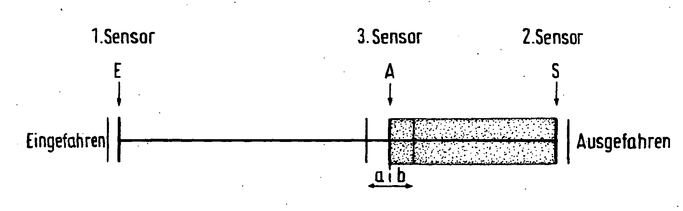

Die einzige Figur zeigt schematisch das Funktionsprinzip einer erfindungsgemäßen Vorrichtung.

In der Figur ist schematische das Funktionsprinzip einer Spoileransteuerung mit Hilfe eines dritten Hallsensors dargestellt. Die Vorrichtung verfügt über drei Hallsensoren, wobei ein erster Sensor einer eingefahrenen Sollgrundstellung (Eingefahren E), ein zweiter Sensor einer Sollbetriebsstellung (S) und ein dritter Sensor einem Zwischenbereich (Ausgefahren A) zugeordnet ist. Diese Spoileranordnung ist nur eine Möglichkeit, denkbar ist auch die Anordnung von zwei Sensoren im Motor als Inkrementalgeber.

Wird der Spoiler nun von einer ersten Stellung in eine zweite Stellung bewegt, so wird die Antriebseinheit des Spoilers in Richtung der gewünschten Stellung angesteuert bis beispielsweise die Signalflanke des dritten im Zwischenbereich angeordneten Hallsensors anschlägt. Der bereits verfahrene Weg kann über interne Impulse, beispielsweise der Antriebseinheit, gezählt werden und nach jedem Stop abgespeichert werden. Die Antriebseinheit befindet sich nach in einem vorgegebenen Solltoleranzbereich. Zur Kontrolle von möglichen Positionsdifferenzen, wird nun überprüft, ob sich die Abgleichs-Positionserfassungseinrichtung, die bei dem Verstellvorgang redundant mitlief bzw. den Weg erfasst, in einem vorgegebenen Solltoleranzbereich (Fangbereich) befindet. Liegt dieser nicht im Fangbereich, so kann der Abgleichs-Positionserfassungseinrichtung die Soll-Position Ausgefahren A zugeordnet werden. Wird in einem anderen Fall der dritte Hallsensor nicht kontaktiert, obwohl die Abgleichs-Positionserfassungseinrichtung über den Fangbereich hinausfährt, so wird die Antriebseinrichtung unmittelbar gestoppt und eine Fehlermeldung im Kombiinstrument ausgegeben. Dies kann durch einen Signalton und/oder einen optischen Hinweis für einen notwendigen Werkstattbesuch sein.

Tritt während einer Verstellbewegung ein unerwarteter Fehler auf, kann es vorkommen das sich der Spoiler in einem entnormierten Zustand befindet. In diesem Falle kann beispielsweise mit Hilfe des dritten Hallsensors eine automatische Normierung durchgeführt werden. Beim nächsten Ausfahren des Spoilers in eine vorgegebene Stellung läuft der Betriebsmodus wie oben beschrieben, und der Abgleichs-Positionserfassungseinrichtung kann eine neue Kennzahl zugeordnet werden.

Das hier offenbarte Vorrichtungs- bzw. Funktionsprinzip wurde voranstehend an lediglich einem Ausführungsbeispiel beschrieben. Es versteht sich, dass es noch weitere Ausführungsmöglichkeiten gibt. So ist es möglich den 1. und 3. Sensor nicht am Endanschlag, sondern am Motor für die Bewegung des Spoilers vorzusehen, welcher dann über die Bewegung und das Zählen der Impulse beim Bewegen des Motors die Endlagen erfasst.

## Patentansprüche

1. Vorrichtung zur Positionserfassung eines Spoilers an einem Kraftfahrzeug, wobei der Spoiler mit einer Antriebseinheit zwischen einer eingefahrenen Sollgrundstellung und mindestens einer ausgefahrenen Sollbetriebsstellung verfahrbar ist, und wobei zumindest ein Sensor vorgesehen ist, mit dem zumindest eine der Sollstellungen des Spoilers erfassbar ist, und der ausgehend von der erfassten Sollposition erste Positionssignale erzeugt, **dadurch gekennzeichnet, dass** eine Abgleichs-Positionserfassungseinrichtung vorgesehen ist, mit der die gegenwärtige Position des Spoilers erfassbar ist, und die ausgehend von der erfassten gegenwärtigen Position zweite Positionssignale erzeugt, wobei eine Auswerteeinheit vorgesehen ist, welche die vom Hallsensor gelieferten ersten Positionssignale und die von der Abgleichs-Positionserfassungseinrichtung gelieferten zweiten Positionssignale auswertet und die ausgehend von dem Auswerteergebnis eine Informationsvorrichtung, die dem Fahrer Informationen über den Zustand mindestens eines der Positionserfassungseinrichtungen bereitstellt, und/oder die Antriebseinheit ansteuert.

2. Vorrichtung nach Anspruch 1, **dadurch gekennzeichnet, dass** die Auswerteeinrichtung ausgelegt ist, um ein Ausbleiben von Hallsignalen zu erfassen und beim Ausbleiben von Hallsignalen nach einer vorgebbaren Zeit, gemessen vom Beginn des Bewegens des Spoilers auf die zumindest eine Sollposition zu, anhand der zweiten Positionssignalen zu entscheiden, ob sich der Spoiler innerhalb eines Solltoleranzbereichs um die zumindest eine Sollstellung befindet und falls a) die Auswerteeinheit entscheidet, dass sich der Spoiler im Solltoleranzbereich befindet oder falls b) die Auswerteeinheit entscheidet, dass sich der Spoiler nicht im Solltoleranzbereich befindet die Antriebseinheit und/oder die Informationsvorrichtung ansteuert.

3. Vorrichtung nach Anspruch 2, **dadurch gekennzeichnet, dass** die Informationsvorrichtung im Fall a) ein vom Fahrer visuell und/oder akustisch und/oder taktil wahrnehmbares Signal ausgibt, dass dem Fahrer Informationen über einen möglichen Defekt des Hallsensors bereitstellt und dass die Informationsvorrichtung im Fall b) ein vom Fahrer visuell und/oder akustisch und/oder taktil wahrnehmbares Signal ausgibt, dass dem Fahrer Informationen über einen möglichen Defekt der Antriebseinheit bereitstellt.

4. Vorrichtung nach einem der Ansprüche 2 oder 3, **dadurch gekennzeichnet, dass** die Auswerteeinrichtung ausgelegt ist, um beim Anzeigen der Sollbetriebsstellung durch den Hallsensor die von den zweiten Positionssignalen wiedergegebene zweite Position mit der von den ersten Positionssignalen wiedergegebenen ersten Position zu vergleichen und falls die Abweichung zwischen der ersten Position und der zweiten Position außerhalb eines vorgebbaren Positionstoleranzbereiches liegt, die Antriebseinheit und/oder die Informationsvorrichtung ansteuert.

5. Vorrichtung nach Anspruch 4, **dadurch gekennzeichnet, dass** bei Abweichung zwischen erster Position und zweiter Position die Informationsvorrichtung ein vom Fahrer visuell und/oder akustisch und/oder taktil wahrnehmbares Signal ausgibt, dass dem Fahrer Informationen über einen möglichen Defekt des Hallsensors bereitstellt.

6. Vorrichtung nach einem der Ansprüche 1 bis 5, **dadurch gekennzeichnet, dass** die Abgleichs-Positionserfassungseinrichtung als eine an der Antriebseinrichtung, insbesondere als eine einen Inkrementalgeber umfassende, Wegmesseinrichtung ausgebildet ist, mit der der von dem Spoiler zurückgelegte Weg erfassbar ist.

7. Vorrichtung nach einem der Ansprüche 1 bis 6, **dadurch gekennzeichnet, dass** die Abgleichs-Positionserfassungseinrichtung ein Rückstellmittel aufweist, dergestalt, mit dem bei Übereinstimmung zwischen erster und zweiter Position an der Abgleichs-Positionserfassungseinrichtung ein vorbestimmter Wert für die Position eingestellt werden kann.

## Claims

1. Device for sensing the position of a spoiler on a motor vehicle, wherein the spoiler can be moved with a drive unit between a retracted setpoint base position and at least one extended setpoint operating position, and wherein at least one sensor is provided with which at least one of the setpoint positions of the spoiler can be sensed, and which generates first position signals on the basis of the sensed setpoint position, **characterized in that** an adjustment position sensing device is provided with which the current position of the spoiler can be sensed, and which generates second position signals on the basis of the sensed current position, wherein an evaluation unit is provided which evaluates the first position signals supplied by the Hall sensor and the second position signals supplied by the adjustment position sensing device, and which actuates, on the basis of the evaluation result, an information device which provides the driver with information about the state of at least one of the position sensing devices and/or actuates the drive unit.

2. Device according to Claim 1, **characterized in that** the evaluation device is configured to sense an absence of Hall signals, and when Hall signals are absent after a predeterminable time, measured from the start of the movement of the spoiler to the at least one setpoint position, to decide, using the second position signals, whether the spoiler is located within a setpoint tolerance range about the at least one setpoint position, and if a) the evaluation unit decides that the spoiler is located in the setpoint tolerance range or if b) the evaluation unit decides that the spoiler is not located in the setpoint tolerance range, it actuates the drive unit and/or the information device.

3. Device according to Claim 2, **characterized in that** in the case a) the information device outputs a signal which can be perceived in a visual and/or acoustic and/or tactile fashion by the driver, which signal provides the driver with information about a possible defect in the Hall sensor, and **in that** in the case b) the information device outputs a signal which can be perceived in a visual and/or acoustic and/or tactile fashion by the driver, which signal provides the driver with information about a possible defect in the drive unit.

4. Device according to one of Claims 2 or 3, **characterized in that** the evaluation device is configured to compare the second position which is represented by the second position signals with the first position which is represented by the first position signals when the setpoint operating position is displayed by the Hall sensor, and if the deviation between the first position and the second position lies outside a predefinable position tolerance range, it actuates the drive unit and/or the information device.

5. Device according to Claim 4, **characterized in that** when there is a deviation between the first position and the second position, the information device outputs a signal which can be perceived in a visual and/or acoustic and/or tactile fashion by the driver, which signal provides the driver with information about a possible defect in the Hall sensor.

6. Device according to one of Claims 1 to 5, **characterized in that** the adjustment position sensing device is embodied on the drive device, in particular as a travel measuring device which comprises an incremental signal transmitter and with which the travel carried out by the spoiler can be sensed.

7. Device according to one of Claims 1 to 6, **characterized in that** the adjustment position sensing device has a restoring means, such that a predetermined value for the position can be set when the first and second positions on the adjustment position sensing device correspond.

## Revendications

1. Dispositif de détection de la position d'un déflecteur d'un véhicule automobile,
le déflecteur pouvant être déplacé à l'aide d'une unité d'entraînement entre une position de base de consigne rétractée et au moins une position de fonctionnement de consigne déployée,
au moins un détecteur étant prévu par lequel au moins l'une des positions de consigne du déflecteur peut être détectée, ce détecteur formant des premiers signaux de position en fonction de la position de consigne détectée,
**caractérisé en ce que**
un système de détection de position et d'équilibrage est prévu, par lequel la position actuelle du déflecteur peut être détectée, ce système formant des deuxièmes signaux de position en fonction de la position effective détectée,
**en ce qu'**une unité d'évaluation est prévue pour évaluer les premiers signaux de position délivrés par le détecteur de Hall et les deuxièmes signaux de position délivrés par le système de détection de position et d'équilibrage et pour commander en fonction du résultat de l'évaluation un dispositif d'information qui délivre au conducteur des informations sur l'état d'au moins un des systèmes de détection de position et/ou qui commande l'unité d'entraînement.

2. Dispositif selon la revendication 1, **caractérisé en ce que** l'unité d'évaluation est conçue pour détecter l'absence de signaux Hall et, en cas d'absence de signaux Hall après une durée prédéterminée mesurée depuis le début du déplacement du déflecteur jusqu'à la ou les positions de consigne, décider à l'aide des deuxièmes signaux de position si le déflecteur se trouve à l'intérieur d'une plage de tolérances de consigne autour de la ou des positions de consigne et **en ce qu'**au cas a), l'unité d'évaluation décide que le déflecteur se trouve dans la plage de tolérances de consigne ou au cas b), l'unité d'évaluation décide que le déflecteur ne se trouve pas dans la plage de tolérances de consigne, l'unité d'évaluation commande l'unité d'entraînement et/ou le dispositif d'information.

3. Dispositif selon la revendication 2, **caractérisé en ce que** dans le cas a), le dispositif d'information délivre au conducteur un signal détectable visuellement, acoustiquement et/ou tactilement qui fournit au conducteur des informations à propos d'un éventuel défaut du détecteur de Hall, et **en ce que** dans le cas b), le dispositif d'informations délivre au conducteur un signal détectable visuellement, acoustiquement et/ou tactilement qui fournit au conducteur des informations sur un éventuel défaut de l'unité d'entraînement.

4. Dispositif selon l'une des revendications 2 ou 3, **caractérisé en ce que** le système d'évaluation est conçu pour, lors de l'affichage de la position de fonctionnement de consigne par le détecteur de Hall, comparer la deuxième position reflétée par les deuxièmes signaux de position à la première position reflétée par les premiers signaux de position et **en ce qu'**au cas où l'écart entre la première position et la deuxième position est situé à l'extérieur d'une plage prédéterminée de tolérances de position, l'unité d'évaluation commande l'unité d'entraînement et/ou le dispositif d'information.

5. Dispositif selon la revendication 4, **caractérisé en ce qu'**en cas d'écart entre la première position et la deuxième position, le dispositif d'information délivre au conducteur un signal détectable visuellement, acoustiquement et/ou tactilement qui fournit au conducteur des informations sur un éventuel défaut du détecteur de Hall.

6. Dispositif selon l'une des revendications 1 à 5, **caractérisé en ce que** le système de détection de position et d'équilibrage est configuré comme système de mesure de déplacement prévu sur le système d'entraînement, en particulier comme système de mesure de déplacement comprenant un émetteur incrémentiel, et par lequel la trajectoire parcourue par le déflecteur peut être détectée.

7. Dispositif selon l'une des revendications 1 à 6, **caractérisé en ce que** le système de détection de position et d'équilibrage présente un moyen de rappel qui permet, en cas de correspondance entre la première et la deuxième position, de régler sur le système de détection de position et d'équilibrage une valeur prédéterminée de la position.
